(19) Europäisches Patentamt
European Patent Office
Office européen des brevets

(11) EP 4 756 904 A1

(12) EUROPEAN PATENT APPLICATION
published in accordance with Art. 153(4) EPC

(43) Date of publication:
10.06.2026 Bulletin 2026/24

(21) Application number: 24847878.6

(22) Date of filing: 25.06.2024

(51) International Patent Classification (IPC):
$H01M\ 4/36^{(2006.01)}$    $H01M\ 4/58^{(2010.01)}$
$H01M\ 4/485^{(2010.01)}$    $H01M\ 10/0567^{(2010.01)}$
$H01M\ 10/0525^{(2010.01)}$

(52) Cooperative Patent Classification (CPC):
Y02E 60/10

(86) International application number:
PCT/CN2024/101331

(87) International publication number:
WO 2025/025917 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023 CN 202310957789

(71) Applicant: BYD Company Limited
Shenzhen, Guangdong 518118 (CN)

(72) Inventors:
• DENG, Xuanwei
  Shenzhen, Guangdong 518118 (CN)
• CHEN, Na
  Shenzhen, Guangdong 518118 (CN)
• ZHOU, Daijin
  Shenzhen, Guangdong 518118 (CN)
• ZHOU, Shujie
  Shenzhen, Guangdong 518118 (CN)
• PAN, Yi
  Shenzhen, Guangdong 518118 (CN)

(74) Representative: Taor, Simon Edward William
Venner Shipley LLP
TIDE Bankside
8 Emerson Street
London SE1 9DU (GB)

(54) LITHIUM BATTERY AND POWER VEHICLE

(57) The lithium battery comprises a positive electrode plate, a negative electrode plate and an electrolyte. The positive electrode plate comprises a positive electrode current collector and a positive electrode material layer provided on the surface of at least one side of the positive electrode current collector. A positive electrode active material of the positive electrode material layer comprises $LiFe_{1-a}Mn_aPO_4$ and a lithium transition metal oxide. The mass of $LiFe_{1-a}Mn_aPO_4$ accounts for $X_1\%$ of the total mass of $LiFe_{1-a}Mn_aPO_4$ and the lithium transition metal oxide, $0< X_1<100$, and $0\leq a\leq0.8$. The electrolyte comprises vinylene carbonate with a mass ratio of A%. The lithium battery satisfies: $0<100\alpha/X_1\leq600$ and $0\leq DCIR\times C_0\times A\times X_1\leq30$, wherein $C_0$ is the discharge capacity at 0.33C of the lithium battery at 25° C; DCIR is the direct current internal resistance of the lithium battery measured based on $C_0$; and $\alpha$ is the Fe content in a negative electrode material of the negative electrode plate of the lithium battery after cycled for 500 times at $1C_0$ at 45° C.

★一般★

FIG. 1

EP 4 756 904 A1

**Description**

**CROSS-REFERENCE TO RELATED APPLICATIONS**

This disclosure claims priority to Chinese Patent Application titled "A LITHIUM BATTERY AND POWER VEHICLE" with application number 202310957789.9, filed with the Chinese Patent Office on July, 31, 2023, which is incorporated herein by reference in its entirety.

**FIELD**

The present disclosure relates to the field of battery technology, particularly to a lithium battery and power vehicle.

**BACKGROUND**

Lithium-ion batteries (also known as "lithium batteries") have been widely used in portable electronic devices (such as mobile phones, tablet computers), new energy vehicles, and other fields. Among them, positive electrode active materials such as lithium iron phosphate (LFP) and lithium manganese iron phosphate (LMFP) are more widely used in new energy vehicles due to their high safety and low cost.

However, during the actual formulation and long-cycle process of batteries, a certain amount of water will inevitably exist in the electrolyte of the battery. This water can lead to the hydrolysis of fluorinated lithium salts in the electrolyte, generating HF. HF will attack the solid electrolyte interface (SEI film) on the surface of the negative electrode, as well as LFP, LMFP, etc., resulting in increased self-discharge of the battery and reduced high-temperature cycle performance. Currently, the general approach is to increase the concentration of negative electrode film-forming additives in the electrolyte to ensure that there are sufficient film-forming additives to repair damaged SEI films, thereby extending the cycle life. However, an excessively high concentration of film-forming additives can lead to an increase in the internal resistance of the battery, which in turn can deteriorate the battery's low-temperature rate performance.

Therefore, the pressing issue at hand is how to ensure that batteries exhibit both excellent high-temperature cycle performance and low-temperature rate performance.

**SUMMARY**

In view of this, this disclosure combines lithium transition metal oxide with $LiFe_{1-a}Mn_aPO_4$ materials and establishes connections with the VC content in the electrolyte, the DC internal resistance of the battery, and the Fe content in the negative electrode material after a certain number of high-temperature cycles. These factors are controlled to meet certain conditions to ensure that the battery has both good high-temperature cycle performance and low-temperature rate performance at 0°C.

In the first aspect, the present disclosure provides a lithium battery. The lithium battery includes a positive electrode plate, a negative electrode plate and an electrolyte. The positive electrode plate includes a positive electrode current collector and a positive electrode material layer arranged on the surface of at least one side of the positive electrode current collector. A positive electrode active material of the positive electrode material layer includes a $LiFe_{1-a}Mn_aPO_4$ material and a lithium transition metal oxide. The mass of the $LiFe_{1-a}Mn_aPO_4$ material accounts for $X_1$% of the total mass of the $LiFe_{1-a}Mn_aPO_4$ material and the lithium transition metal oxide, where $0<X_1<100$ and $0≤a≤0.8$. The electrolyte includes vinylene carbonate (VC) with a mass ratio of A%. The lithium battery satisfies:

$$0＜100\alpha/X_1≤600, \text{ and } 0≤DCIR×C_0×A×X_1≤30,$$

where $C_0$ is the discharge capacity at 0.33C of the lithium battery at 25° C, in Ah; DCIR is the direct current internal resistance of the lithium battery measured based on $C_0$, in $\Omega$; and $\alpha$ is the Fe content in a negative electrode material of the negative electrode plate of the lithium battery after being cycled for 500 times at $1C_0$ at 45° C, in ppm.

In this disclosure, the $LiFe_{1-a}Mn_aPO_4$ material and the lithium transition metal oxide are jointly used as the positive electrode active material for the lithium battery. Leveraging the good water absorption capacity of lithium transition metal oxide, residual moisture in the electrolyte can be absorbed in advance to reduce the probability of SEI film damage. Furthermore, a relationship is established between the mass ratio $X_1$% of the $LiFe_{1-a}Mn_aPO_4$ material in the $LiFe_{1-a}Mn_aPO_4$ material and the lithium transition metal oxide, the mass content A% of VC in the electrolyte, the discharge capacity $C_0$ at 0.33C of the battery at 25° C, the direct current internal resistance DCIR, the Fe content $\alpha$ in the negative electrode material of the battery after being cycled for 500 times at $1C_0$ at 45° C, and etc. By controlling $100\alpha/X_1$ within the range of (0, 600] and $DCIR×C_0×A×X_1$ within the range of [0, 30], the battery can achieve both good high-temperature cycle performance at 45°C and low-temperature rate performance at 0°C.

In some embodiments, $0.01 \leq DCIR \times C_0 \times A \times X_1 \leq 24$.

In some embodiments, $20 \leq 100\alpha/X_1 \leq 540$.

In some embodiments, the A is within the range of 0 to 2.

In some embodiments, the product of the DCIR and the $C_0$ is less than or equal to 0.22 $\Omega \cdot$Ah.

In some embodiments, the $X_1$ is within the range of 50 to 95.

In some embodiments, the surface of the $LiFe_{1-a}Mn_aPO_4$ material further has a conductive coating layer.

In some embodiments, the $LiFe_{1-a}Mn_aPO_4$ material contains doping elements, and the doping elements include at least one of Ti, Zr, V, Cr, and Al.

In some embodiments, the lithium transition metal oxide includes $LiNi_xCo_yM^3_zO_2$, where $x \geq 0$, $y \geq 0$, $z \geq 0$, and $x+y+z=1$; $M^3$ is selected from one or more of Mn, Al, Mg, Sr, V, Fe, Cr, Ni, Cu, Zn, Zr, Ti, Y, and W, and when $M^3$ is Al, Mg, or Sr, x and y cannot both be 0 at the same time.

In some embodiments, $0.33 \leq x \leq 0.98$, $0 < y < 1$.

In the second aspect, the present disclosure further provides a power vehicle. The power vehicle is equipped with the lithium battery described in the first aspect of this disclosure.

Due to the adoption of the aforementioned lithium battery, which can simultaneously exhibit excellent high-temperature cycle performance and low-temperature rate performance at 0° C, the market competitiveness of this power vehicle is outstanding.

## BRIEF DESCRIPTION OF THE DRAWINGS

FIG. 1 shows a schematic diagram of a lithium battery according to an embodiment of the present disclosure.

FIG. 2 shows a schematic diagram of a power vehicle according to an embodiment of the present disclosure.

Reference numerals are represented as follows:

10- lithium battery, 110- positive electrode plate, 111- positive electrode current collector, 112- positive electrode material layer, 120- negative electrode plate, 121- negative electrode current collector, 122- negative electrode material layer, 130- separator, 140- electrolyte, 1- power vehicle.

## DETAILED DESCRIPTION

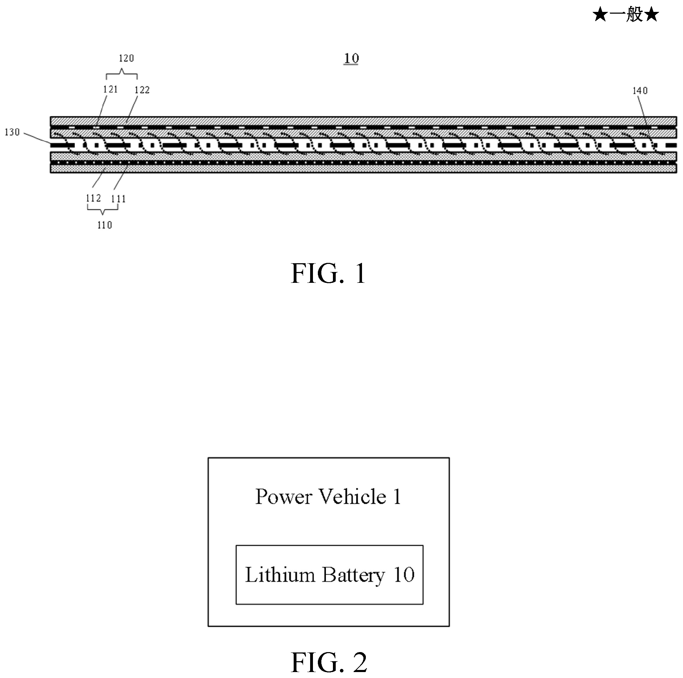

This disclosed embodiment provides a lithium battery. As shown in FIG. 1, the lithium battery 10 includes a positive electrode plate 110, a negative electrode plate 120 and an electrolyte 140. The positive electrode plate 110 includes a positive electrode current collector 111 and a positive electrode material layer 112 arranged on the surface of at least one side of the positive electrode current collector 111. A positive electrode active material of the positive electrode material layer 112 includes a $LiFe_{1-a}Mn_aPO_4$ material and a lithium transition metal oxide. The mass of the $LiFe_{1-a}Mn_aPO_4$ material accounts for $X_1\%$ of the total mass of the $LiFe_{1-a}Mn_aPO_4$ material and the lithium transition metal oxide, where $0 < X_1 < 100$ and $0 \leq a \leq 0.8$. The electrolyte includes vinylene carbonate (VC) with a mass ratio of A%. The lithium battery satisfies:

$$0 < 100\alpha/X_1 \leq 600, \text{ and } 0 \leq DCIR \times C_0 \times A \times X_1 \leq 30,$$

where $C_0$ is the discharge capacity at 0.33C of the lithium battery at 25° C, in Ah; DCIR is the direct current internal resistance of the lithium battery measured based on $C_0$, in $\Omega$; and $\alpha$ is the Fe content in a negative electrode material of the negative electrode plate of the lithium battery after being cycled for 500 times at $1C_0$ at 45° C, in ppm.

In this disclosure, the lithium transition metal oxide and the $LiFe_{1-a}Mn_aPO_4$ material are jointly used as the positive electrode active material for the lithium battery. On the one hand, the lithium transition metal oxides are alkaline and have good water absorption properties, which can absorb residual moisture in the electrolyte and reduce the chance of hydrolysis of fluorinated electrolyte salts in the electrolyte to produce HF, thereby reducing the exposure of $LiFe_{1-a}Mn_aPO_4$ material and SEI film to HF attack, and consequently lowering the self-discharge level of the battery cell and enhancing its high-temperature cycle performance. On the other hand, in this disclosure, An indirect relationship is established between the mass ratio of lithium transition metal oxide in the sum of $LiFe_{1-a}Mn_aPO_4$ material and lithium transition metal oxide, the mass content A% of VC in the electrolyte, the discharge capacity $C_0$ at 0.33C of the battery, the direct current internal resistance DCIR, and the Fe content in the negative electrode material of the battery after cycled for a certain number of times at 45°C. By controlling $100\alpha/X1$ within the range of (0, 600] and $DCIR \times C_0 \times A \times X_1$ within the range of 0 to 30, the battery can achieve both good high-temperature cycle performance at 45°C and low-temperature rate performance at 0°C.

For ease of expression, hereinafter, $100\alpha/X_1$ will be represented by the letter X, and $DCIR \times C_0 \times A \times X_1$ will be represented by the letter Y. Where $X = \alpha/(X_1/100)$, X reflects the comprehensive impact of adding lithium transition metal oxide to the positive electrode of the battery on its high-temperature cycle performance. Controlling X to not exceed 600 can reflect, to a certain extent, the formation of a structurally complete SEI film on the negative electrode of the battery, ensuring that the high-temperature cycle life of the battery is not excessively short.

$$Y = DCIR \times C_0 \times A \times X_1, \ Y$$

reflects the comprehensive impact of lithium transition metal oxide on the low-temperature rate performance (especially the discharge rate at 0°C) of the lithium battery. Where Y ranges from 0 to 30, it can ensure a low internal resistance of the battery at 0°C, resulting in high discharge capacity and good rate performance at 0°C.

The lithium battery provided in this disclosed embodiment can achieve both good high-temperature cycle performance and 0°C low-temperature rate performance when meeting the above-mentioned requirements, providing a quantitatively controllable means for manufacturing batteries with excellent comprehensive performance.

In some embodiments of this disclosure, X can range from 1 to 590, and further can range from 20 to 540. This ensures not only a higher high-temperature cycle life for the battery, but also better low-temperature rate performance at 0°C and improved safety performance. Specifically, X can be 25, 30, 40, 50, 70, 80, 100, 120, 150, 180, 200, 250, 300, 350, 380, 400, 450, 480, 500, 520, or 530, etc. In some embodiments, X can range from 50 to 530, and further can range from 70 to 500.

Specifically, the aforementioned Y can be 0.01, 0.05, 0.1, 0.2, 0.5, 1, 2, 3, 5, 8, 9, 10, 15, 20, 23, 25, 28, or 29, etc. When Y is greater than 0, it is more conducive to ensuring a lower internal resistance of the battery at low temperatures of 0°C. In some embodiments of this disclosure, Y can be in the range of 0.01 to 24, and further, Y can be in the range of 0.1 to 24. In other embodiments, Y is in the range of 0.5 to 24. In this case, the lithium battery exhibits superior low-temperature rate performance at 0°C.

In the embodiments of this disclosure, the product of DCIR and $C_0$ (i.e. $DCIR \times C_0$) is less than or equal to 0.22 $\Omega \cdot Ah$. This can better ensure the low temperature rate performance of the lithium battery at 0°C. For example, the ratio of the discharge capacity of the battery after being charged and discharged at 0.33C for 3 times at 0°C to the discharge capacity after being charged and discharged at 0.33C for 3 times at 25°C can be above 81%, preferably above 83%.

In the embodiments of this disclosure, the capacity retention rate of the lithium battery after being cycled for 500 times at $1C_0$ at 45°C can be over 85%, and further can be over 90%.

Among the above parameters, $C_0$, DCIR, and A are measured for lithium battery in full package form. The shape of the lithium battery is not particularly limited and can be square, cylindrical, etc. Among them, the $C_0$ specifically refers to the discharge capacity at 0.33C of the lithium battery at 25°C, and $C_0$ can be referred to as the calibrated discharge capacity of lithium batteries at room temperature. The specific testing methods for $C_0$, DCIR, and A can be found in the description below this disclosure.

The mass rate A% of VC in the electrolyte of the lithium battery can be determined by disassembling the lithium battery, analyzing and measuring the composition of the electrolyte. In some embodiments of this disclosure, the A can be within the range of 0-2. A lower content of the A helps to maintain better 0°C low-temperature rate performance of the battery. In some embodiments, the A may be 0.01 to 2, such as 0.05, 0.1, 0.2, 0.3, 0.5, 1.0, 1.2, 1.5, 1.6, 1.8, or 1.9, etc.

The mass ratio X1% of the $LiFe_{1-a}Mn_aPO_4$ material can be determined by disassembling the lithium battery, analyzing and measuring the composition of the positive electrode active material in the positive electrode plate.

In this disclosure, the mass of the $LiFe_{1-a}Mn_aPO_4$ material accounts for $X_1$% of the total mass of the $LiFe_{1-a}Mn_aPO_4$ material and the lithium transition metal oxide, and the mass of the lithium transition metal oxide accounts for $X_2$% of the total mass of the $LiFe_{1-a}Mn_aPO_4$ material and the lithium transition metal oxide, where $X_1 + X_2 = 100$. It can be understood that the positive electrode active material of this disclosure may further include other active materials besides $LiFe_{1-a}Mn_aPO_4$ material and lithium transition metal oxide.

In some embodiments of this disclosure, the $X_1$ is within the range of 50 to 95. Correspondingly, $X_2$ is within the range of 5 to 50. Introducing lithium transition metal oxides in appropriate proportions can ensure that residual moisture in the electrolyte of the battery containing $LiFe_{1-a}Mn_aPO_4$ material is fully absorbed, and the low-temperature rate performance of the battery at 0°C is good, without significantly reducing the safety performance of the battery.

In this disclosure, when a=0, the material with the formula $LiFe_{1-a}Mn_aPO_4$ is specifically lithium iron phosphate material (LFP); When a>0, the material is specifically manganese iron phosphate lithium material (LMFP), where $a \leq 0.8$, which can help ensure the stability of the structure of the manganese iron phosphate lithium material. Generally, the particle size of $LiFe_{1-a}Mn_aPO_4$ material is smaller than that of ternary material. In addition, $LiFe_{1-a}Mn_aPO_4$ material can also contain doping elements (such as at least one of Ti, Zr, V, Cr, Al) to enhance its rate performance. Furthermore, the surface of $LiFe_{1-a}Mn_aPO_4$ material can also have a conductive coating layer (such as a conductive carbon layer) to improve its conductivity.

In this disclosure, lithium transition metal oxides refer to oxides containing lithium elements and transition metal elements. Among them, the types of transition metal elements contained in the lithium transition metal oxide can be one or more. In addition, the lithium transition metal oxide may also include other metal elements besides transition metal elements (such as main group metal elements).

In some embodiments of this disclosure, the lithium transition metal oxide comprises $LiNi_xCo_yM^3_zO_2$, where $x \geq 0$, $y \geq 0$, $z \geq 0$, and $x+y+z=1$; $M^3$ is selected from one or more of Mn, Al, Mg, Sr, V, Fe, Cr, Ni, Cu, Zn, Zr, Ti, Y, and W, and when $M^3$ is Al, Mg, or Sr, x and y cannot both be 0 at the same time. For example, $0<y<1$, $0<x<1$. At this time, the lithium transition metal oxide can be referred to as "ternary positive electrode material containing nickel and cobalt". Furthermore, the ternary positive electrode material is a quasi-single crystal material with high structural stability. In some embodiments, $0.33 \leq x \leq 0.98$. In an embodiment, $0.01 \leq y \leq 0.33$, $0.01 \leq z \leq 0.33$. Among them, when the value of x is high, the alkalinity and water absorption of the lithium transition metal oxide are higher. For example, $0.70 \leq x \leq 0.98$, further for example, $0.80 \leq x \leq 0.90$, and further preferably $0.83 \leq x \leq 0.88$. In some embodiments, $M^3$ may be selected from at least one of Mn and Al.

In this disclosure, the positive electrode material layer can be arranged on one side surface or opposite side surfaces of the positive electrode current collector. The positive electrode material layer contains not only the positive electrode active material, but also adhesive and conductive agent. Among them, the types and contents of adhesive and conductive agents are common choices in the field of batteries. For example, the adhesive may be selected from one or more of polyvinylidene fluoride (PVDF), polytetrafluoroethylene (PTFE), polyvinyl alcohol (PVA), polyacrylonitrile (PAN), polyimide (PI), polyacrylic acid (PAA), polyacrylate, polyolefin (such as polyethylene, polypropylene, and polystyrene), styrene butadiene rubber (SBR), carboxymethyl cellulose sodium (CMC), sodium alginate, etc. The conductive agent can be selected from at least one of conductive carbon black (such as acetylene black, Ketchen black), carbon nanotubes (CNT), graphene, carbon fiber, graphite, etc., but is not limited to these. In addition, the positive electrode current collector can include but not limited to metal film materials, foam metal mesh, etc., such as aluminum foil, aluminum foil with conductive layer on the surface (carbon coated aluminum foil), etc. The solvent in the positive electrode slurry used to form the positive electrode material layer can be selected from one or more of N-methylpyrrolidone (NMP), dimethylformamide (DMF), diethylformamide (DEF), water, and alcohols. For example, the solvent includes NMP. There is no special limitation on the solvent content in the positive electrode slurry, as long as it can meet the flowability and uniformity of the positive electrode slurry coating.

There are no restrictions on the surface density and compaction of the positive electrode plate mentioned above in this disclosure, and it can be designed according to specific electrochemical systems. In some embodiments, the positive electrode plate of this disclosure is a double-sided electrode plate with a density of 300 to 500 g/m2, and its compacted density may be 2.40 to 3.3 g/cm3.

In this disclosure, as shown in FIG. 1, the negative electrode plate 120 includes a negative electrode current collector 121 and a negative electrode material layer 122 arranged on the surface of at least one side of the negative electrode current collector. The negative electrode material layer contains a negative electrode active material, adhesive, and an optional conductive agent. The negative electrode active material may include, but is not limited to, one or more of carbon materials, silicon-based materials, tin-based materials, and lithium titanate. Among them, carbon materials include one or more of soft carbon, hard carbon, graphitized carbon microspheres, graphite (such as natural graphite or artificial graphite), etc. Silicon-based materials may include one or more of elemental silicon, silicon alloys, silicon oxides, silicon-carbon composite materials, silicon carbide, etc. Tin-based materials may include one or more of elemental tin, tin oxides, tin-based alloys, tin-carbon compounds, etc. In some embodiments, the negative electrode active material includes graphite, specifically natural graphite or artificial graphite. Similarly, the selection range of adhesive and conductive agents in the negative electrode material layer can be referred to the description of the positive electrode plate above. The negative electrode current collector may include, but is not limited to, metal film materials, foam metal meshes, etc., such as copper foil, carbon-coated copper foil, etc.

The electrolyte of this disclosure contains an electrolyte lithium salt, an organic solvent, and a film-forming additive. The film-forming additive includes at least vinylene carbonate (VC). In some embodiments, the film-forming additive may further include at least one of vinyl ethylene carbonate (VEC), phenyl ethylene carbonate (PhEC), phenyl vinylene carbonate (PhVC), fluoroethylene carbonate (FEC), etc. The organic solvent may include one or more of carbonate solvents and carboxylate solvents. The carboxylate solvents may include cyclic carbonates and/or linear carbonates. The specific composition of the electrolyte disclosed herein is not limited and can be a conventional choice in the battery field. Generally, the electrolyte filling factor is typically 2.0 to 4.5g/Ah.

As shown in FIG. 1, the lithium battery 10 includes a separator 130. The separator is used to separate the positive electrode plate and the negative electrode plate, maintaining insulation between them and preserving liquid retention characteristics. The separator, along with the positive electrode plate and the negative electrode plate, constitutes the battery cell, which is arranged in a battery case (such as an aluminum-plastic film). The battery case is filled with electrolyte. This disclosure does not specifically limit the separator, which can be any commonly used separator in lithium batteries, including but not limited to single-layer PP (polypropylene) film, single-layer PE (polyethylene) film, double-layer PP/PE, double-layer PP/PP, and triple-layer PP/PE/PP separators.

The embodiment of this disclosure also provides a power vehicle. As shown in FIG. 2, the power vehicle 1 can be equipped with the lithium battery of this disclosed embodiment. In some embodiments of this disclosure, the power vehicle further includes a load (such as a motor) connected to the lithium battery. The lithium battery is configured to supply power to the load. Due to the use of the lithium battery, it can provide sustained power to the power vehicle even at low temperatures, resulting in a long driving range and high safety for the vehicle.

Due to the use of the lithium battery, which can balance good high-temperature cycle performance and low-temperature rate performance, in power vehicles, the battery can provide sustained power for the vehicles at both high and low temperatures, resulting in long range, good charge and discharge tolerance, and high safety. This makes the power vehicles highly competitive in the market.

The technical solutions of the embodiments of the present disclosure are further described below in conjunction with multiple specific embodiments.

Embodiment 1

A preparation method for a lithium battery, including:

(1) Preparation of positive electrode plate:

Preparation of positive electrode slurry: the positive electrode active material, carbon nanotube (CNT) conductive agent, carbon black (SP) conductive agent, adhesive - PVDF, and solvent NMP are mixed at a mass ratio of 100:12:0.3:2.5:55. After uniform dispersion, the positive electrode slurry is obtained. The positive electrode active material specifically consists of a mixture of lithium iron phosphate (LiFePO4, abbreviated as LFP) and lithium transition metal oxide (specifically, single-crystal lithium nickel cobalt manganese oxide, abbreviated as NCM, with the general structural formula $LiNi_{0.7}Co_{0.1}Mn_{0.2}O_2$). The particle size D50 of LFP is 0.8 to 1.4 $\mu$m, and its specific capacity is delivered at 142 mAh/g; the particle size D50 of NCM is 3.5 to 5 $\mu$m, and its specific capacity is delivered at 189 mAh/g.

An aluminum foil with a thickness of 12$\mu$m is used as the positive electrode current collector. The positive electrode slurry is applied on one side of the aluminum foil, and a positive electrode material layer is formed after drying. Then, in the same way, the positive electrode slurry is applied on the other side of the aluminum foil to form a positive electrode material layer, obtaining a double-sided positive electrode plate. The double-sided positive electrode plate is roll pressed, slit, and die-cut to obtain a ready-to-use positive electrode plate with a double-sided areal density of approximately 400g/m2.

(2) Preparation of negative electrode plate:

Natural graphite with an initial specific capacity of 355mAh/g is mixed with binder CMC, adhesive SBR, and water in a mass ratio of 100:1.5:3:130 to obtain the negative electrode slurry. The negative electrode slurry is evenly coated on both sides of an 8$\mu$m thick copper foil, and after baking at 110°C to remove the water, negative electrode material layers are formed on both sides of the copper foil. Then, through roll pressing, slitting, and die-cutting, double-sided negative electrode plates are obtained.

(3) Assembly of complete battery:

The double-sided positive electrode plate, PP separator, and negative electrode plate are stacked in a Z-shaped manner to assemble a battery cell with a uniform direction. The thermally pressed battery cell is arranged in a battery case, and an electrolyte containing VC is injected under vacuum with a filling coefficient of 3.5g/Ah (The electrolyte solution includes common lithium salt LiPF6, common organic solvents, and VC, wherein the initial VC content in the electrolyte as shown in Table 1). Subsequently, the case is sealed, and then undergoes high-temperature aging, formation, aging, and capacity grading before being vacuum sealed to produce a square pouch battery with a length of 80mm, width of 60mm, and height of 7mm.

It should be noted that this disclosure does not limit the order of execution of various operations involved in the preparation method of the lithium battery. For example, in this disclosure, operation (1) and operation (2) may be performed simultaneously, or operation (2) may be performed before operation (1), or operation (1) may be performed before operation (2).

The full battery of Embodiment 1 undergoes the following performance tests. The relevant results are also summarized in Table 1 below.

    a) Discharge capacity test of battery discharged at 0.33C at 25°C: At 25°C, the full battery is fully charged at a constant current and voltage of 0.33C until the voltage reaches 4.2V, followed by a 30-minute rest; it is then discharged at a constant current of 0.33C until the voltage reaches 2.0V, followed by another 30-minute rest; this charge-discharge cycle is repeated three times, and the capacity discharged in the third time is recorded as $C_0$, in Ah.

b) DCIR test: The battery is charged at $0.33C_0$ to a cut-off current of $0.5C_0$ at 25°C, allowed to stand for 20 minutes, and the battery voltage $V_1$ after the end of the standing period is recorded. Then, it is discharged at $1.5C_0$ for 30 seconds, and the battery voltage $V_2$ after the end of the discharge is recorded. Here, DCIR=$(V1-V2)/1.5C_0$, in $\Omega$. Thus, DCIR$\times C_0=(V_1-V_2)/1.5$, in $\Omega \cdot$Ah.

c) High-temperature 45°C cycle performance test: The battery is charged at a constant current and voltage of $1C_0$ to 4.2V at 45°C, with a cut-off current of $0.05C_0$, followed by a 30-minute rest. Then, it is discharged at a constant current of $1C_0$ to 2.0V, followed by another 30-minute rest. The above steps are repeated 500 times, and the ratio of the capacity after 500 cycles at 45°C to the initial discharge capacity at 45°C is taken as the cycle capacity retention rate $\beta$.

d) 0°C Discharge rate test: The battery is to be left standing in an environment at 0°C for 4 hours, followed by three cycles of charging and discharging at 0.33C, with a voltage range of 2.0 to 4.2V. During the charging and discharging process, a 30-minute rest is to be taken. The ratio of the discharge capacity C' from the third cycle to the aforementioned $C_0$ is to be considered as the battery's 0°C low-temperature discharge rate $\gamma$. In other words, $\gamma$ represents the ratio of the discharge capacity of the lithium battery after three cycles of charging and discharging at 0.33C at 0°C to that after three cycles of charging and discharging at 0.33C at 25°C.

e) Test method for negative electrode Fe content: The battery is charged at a constant current and voltage of $1C_0$ to 4.2V at 45°C, with a cut-off current of $0.05C_0$, followed by a 30-minute rest; then it is discharged at a constant current of $1C_0$ to 2.0V, followed by another 30-minute rest. The above steps are repeated 500 times. The battery is disassembled and the negative electrode plate is removed. It is soaked in dimethyl carbonate (DMC) solvent for 10 minutes, twice in total. Subsequently, the negative electrode plate is dried and the powder is scraped off. The collected powder material is measured for Fe content using an inductively coupled plasma spectrometer (ICP), to determine the Fe content in the negative electrode material of the negative electrode plate to be $\alpha$ ppm.

f) Testing the composition of the positive active material in the positive electrode plate of the disassembled battery: The batteries are disassembled and the positive electrode plate is removed. The powder was scraped off, and the collected powder material is subjected to composition analysis using an inductively coupled plasma spectrometer (ICP). It is found that the positive active material in the positive electrode plate is a mixture consisting of LFP with a mass ratio of $X_1$% and lithium transition metal oxide with a mass ratio of $X_2$%. Where $X_1 + X_2 = 100$, and the specific value of $X_1$ is listed in Table 1.

g) The electrolyte VC content measured from disassembled batteries: At 25 °C, a suitable solvent (in this disclosure, EP, specifically ethyl propionate) is injected into the battery cell; the battery cell filled with EP is sealed, and then shaken on a shaking table for 24 hours until the electrode plate is fully soaked. Afterwards, the battery cell is disassembled, the liquid is removed and tested using a gas chromatography-mass spectrometry (GC-MS) instrument. The composition and content of solvents and additives in the electrolyte can be measured, among which the mass proportion of VC in the electrolyte is measured to be A%.

Furthermore, according to the parameters listed in Table 1, the positive electrode plates and lithium batteries for the remaining embodiments and comparison examples are prepared, and the relevant test results are also summarized in Table 1 below. Among them, the lithium transition metal oxides used in Embodiments 2 to 13 and Comparison Examples 4 to 6 are the same as in Embodiment 1, both being NCM. The lithium transition metal oxide used in Embodiment 14 is lithium nickelate ($LiNiO_2$, abbreviated as LNO), and the lithium transition metal oxide used in Embodiment 15 is lithium cobaltate ($LiCoO_2$, abbreviated as LCO).

Table 1: Some Parameters and Test Results of Each Embodiment and Comparison Example

| | $X_1$ | VC Content of Electrolyte A % | DCIR $\times C_0$ ($\Omega \cdot$A-h) | Iron Content Dissolved from Negative Electrode after 500 Cycles at 45°C $\alpha$ ppm | X | Y | Capacity Retention Rate after 500 Cycles at 45°C $\beta$(%) | 0°C Low-temperature Discharge Rate $\gamma$(%) |
|---|---|---|---|---|---|---|---|---|
| Embodiment 1 | 95 | 0.11 | 0.141 | 327 | 344.2 | 1.47 | 90.8 | 84.04 |
| Embodiment 2 | 80 | 0.17 | 0.136 | 178.5 | 223.1 | 1.85 | 91.6 | 86.14 |

(continued)

| | $X_1$ | VC Content of Electrolyte A % | DCIR $\times C_0$ ($\Omega \cdot$A-h ) | Iron Content Dissolved from Negative Electrode after 500 Cycles at 45°C $\alpha$ ppm | X | Y | Capacity Retention Rate after 500 Cycles at 45°C $\beta$(%) | 0°C Low-temperature Discharge Rate $\gamma$(%) |
|---|---|---|---|---|---|---|---|---|
| Embodiment 3 | 60 | 0.14 | 0.139 | 119 | 198.3 | 1.17 | 93.1 | 86.75 |
| Embodiment 4 | 50 | 0.21 | 0.132 | 108.5 | 217.0 | 1.39 | 94.8 | 87.54 |
| Embodiment 5 | 60 | 1.74 | 0.207 | 43 | 71.7 | 21.61 | 93.1 | 88.71 |
| Embodiment 6 | 95 | 0 | 0.121 | 512 | 538.9 | 0.00 | 89.7 | 84.17 |
| Embodiment 7 | 95 | 1.37 | 0.197 | 21 | 22.1 | 25.64 | 89.9 | 82.9 |
| Embodiment 8 | 50 | 1.2 | 0.169 | 54 | 108 | 10.14 | 95.4 | 85.7 |
| Embodiment 9 | 80 | 1.63 | 0.217 | 59 | 73.75 | 28.30 | 92.3 | 83.6 |
| Embodiment 10 | 60 | 0.4 | 0.152 | 97 | 161.7 | 3.65 | 89.1 | 89.2 |
| Embodiment 11 | 98 | 0.12 | 0.143 | 586 | 598.0 | 1.68 | 90.1 | 84.71 |
| Embodiment 12 | 80 | 0.05 | 0.138 | 204 | 255.0 | 0.55 | 92.9 | 87.3 |
| Embodiment 13 | 99 | 0.02 | 0.137 | 591 | 597 | 0.27 | 88.27 | 84.16 |
| Embodiment 14 | 60 | 1.59 | 0.213 | 51 | 85.0 | 20.32 | 91.7 | 88.57 |
| Embodiment 15 | 60 | 1.68 | 0.187 | 49 | 81.7 | 18.85 | 92.1 | 89.21 |
| Comparison Example 1 | 10 0 | 0.11 | 0.146 | 910 | 910.0 | 1.61 | 84 | 82.13 |
| Comparison Example 2 | 10 0 | 1.4 | 0.224 | 184 | 184.0 | 31.36 | 90.7 | 79.21 |
| Comparison Example 3 | 10 0 | 3.1 | 0.271 | 124 | 124.0 | 84.01 | 91.3 | 77.53 |
| Comparison Example 4 | 95 | 3.01 | 0.269 | 73.5 | 77.4 | 76.92 | 91.2 | 76.58 |
| Comparison Example 5 | 60 | 3.14 | 0.271 | 43 | 71.7 | 51.06 | 92.1 | 80.17 |
| Comparison Example 6 | 99 | 0.05 | 0.143 | 687 | 693.9 | 0.71 | 86.1 | 82.1 |

By comparing Embodiment 1 to 4 with Comparison Example 1 in Table 1, it can be seen that the VC content in the electrolyte of these disassembled batteries is close and relatively low, and the DCIR$\times C_0$ value is also close and low. Since the positive active material in Comparison Example 1 is entirely composed of LFP material with poor intrinsic low-temperature performance (i.e., $X_2$ is 0), although the Y value falls within the range of [0, 30] required by this disclosure, the low-temperature discharge ratio γ of the battery at 0°C is still lower than that of Embodiment 1 to 4. Additionally, since the X value of Comparison Example 1 is not within the range of (0, 600) required by this disclosure, the capacity retention rate β of the battery after 500 cycles at high temperature (45°C) is significantly lower than that of Embodiment 1 to 4 batteries. Although the positive electrode in Comparison Example 6 also contains alkaline NCM, and the Y value of the battery falls within the range of [0, 30] required by this disclosure, the X value is greater than 600, exceeding the range required by this disclosure. Therefore, the low-temperature discharge ratio and high-temperature cycle performance of the battery are still lower than those of Embodiment 1 to 4. Analogously, the comparison between Comparison Example 2 and Embodiments 5, 9, and 14, which have similar DCIR×C0 values, yields results similar to those between Embodiment 1 to 4 and Comparison Example 1. Furthermore, the battery of Comparison Example 3, with an X value within the required range and a Y value outside the required range, exhibits poor low-temperature performance and cannot simultaneously achieve good low-temperature discharge performance at 0°C and high-temperature cycle performance.

By comparing Embodiment Examples 3, 5, and 10 with Comparison Example 5, it can be seen that under the condition of the same mass ratio $X_2$ of alkaline NCM in the positive active material, the X value of the battery in Comparison Example 5 falls within the range of (0, 600) required by this disclosure, but the Y value does not meet the requirement of not exceeding 30, resulting in a relatively low 0°C low-temperature discharge ratio γ. A similar result is observed in the comparison between Embodiment Example 1 and Comparison Example 4 under the same $X_2$ value. Similarly, a comparable result is found in the comparison between Embodiment Example 13 and Comparison Example 6 under the same $X_2$ value.

Furthermore, through a comparison between Embodiment 1 and Embodiment 6, it can be observed that, under the same mass ratio $X_2$ of NCM, the VC concentration in the battery electrolyte of Embodiment 6 is lower than that of Embodiment 1, reaching as low as 0. However, its parameters X and Y are still within the range required by this disclosure. The battery's 45°C cycle capacity retention rate can be maintained near 90%, and its low-temperature discharge capability has slightly improved. The overall performance of the battery remains good. In addition, a comparison between Embodiment 6, 7, and Embodiment 1 reveals that when Y is in the range of 0.11 to 24, the lithium battery exhibits superior 45°C cycle performance and 0°C low-temperature discharge performance.

In other embodiments of the present disclosure, lithium batteries with different X and Y values, such as Examples 8 to 13, can also exhibit good high-temperature cycle performance at 45°C and low-temperature rate performance at 0°C. In particular, their low-temperature discharge performance at 0°C is superior to that of Comparison Examples 1 to 6. Moreover, batteries in Examples 14 to 15, where the type of lithium transition metal oxide is changed, can also achieve a good balance between the aforementioned high-temperature cycle performance and low-temperature rate performance at 0°C.

From the above analysis, it can be seen that the lithium battery provided in this disclosed embodiment incorporates lithium transition metal oxide as a supplement to the lithium-containing phosphate cathode material, and establishes a relationship between the mass ratio of lithium transition metal oxide and the VC content in the electrolyte, such that the aforementioned defined parameters X fall within the range of (0, 600) and Y fall within the range of [0, 30]. This ensures that the battery exhibits both good high-temperature cycle performance and low-temperature rate performance at 0°C.

The above-mentioned embodiments only express several implementation methods of this disclosure, with relatively specific and detailed descriptions, but they should not be construed as limiting the scope of this disclosed patent. It should be noted that for persons having ordinary skill in the art, several variations and improvements can be made without departing from the concept of this disclosure, and these all fall within the protection scope of this disclosure. Therefore, the protection scope of this disclosed patent shall be subject to the appended claims.

**Claims**

1. A lithium battery (10), comprising a positive electrode plate (110), a negative electrode plate (120) and an electrolyte (140), wherein the positive electrode plate comprises a positive electrode current collector (111) and a positive electrode material layer (112) arranged on the surface of at least one side of the positive electrode current collector, wherein a positive electrode active material of the positive electrode material layer comprises a $LiFe_{1-a}Mn_aPO_4$ material and a lithium transition metal oxide, wherein the mass of the $LiFe_{1-a}Mn_aPO_4$ material accounts for $X_1$% of the total mass of the $LiFe_{1-a}Mn_aPO_4$ material and the lithium transition metal oxide, where $0 < X_1 < 100$ and $0 \leq a \leq 0.8$; wherein the electrolyte comprises vinylene carbonate with a mass ratio of A%; wherein the lithium battery satisfies:

$$0 < 100a/X_1 \leq 600, \text{ and } 0 \leq DCIR \times C_0 \times A \times X_1 \leq 30,$$

where $C_0$ is the discharge capacity at 0.33C of the lithium battery at 25° C, in Ah; DCIR is the direct current internal resistance of the lithium battery measured based on $C_0$, in $\Omega$; and $\alpha$ is the Fe content in a negative electrode material of the negative electrode plate of the lithium battery after being cycled for 500 times at $1C_0$ at 45° C, in ppm.

2. The lithium battery according to claim 1, wherein $0.01 \leq DCIR \times C_0 \times A \times X_1 \leq 24$.

3. The lithium battery according to claim 1 or 2, wherein $20 \leq 100\alpha/X_1 \leq 540$.

4. The lithium battery according to any one of claims 1 to 3, wherein the A is within the range of 0 to 2.

5. The lithium battery according to any one of claims 1 to 4, wherein the product of the DCIR and the $C_0$ is less than or equal to 0.22 $\Omega \cdot$Ah.

6. The lithium battery according to any one of claims 1 to 5, wherein the $X_1$ is within the range of 50 to 95.

7. The lithium battery according to any one of claims 1 to 6, wherein the surface of the $LiFe_{1-a}Mn_aPO_4$ material further has a conductive coating layer.

8. The lithium battery according to any one of claims 1 to 7, wherein the $LiFe_{1-a}Mn_aPO_4$ material contains doping elements, and the doping elements comprise at least one of Ti, Zr, V, Cr, and Al.

9. The lithium battery according to any one of claims 1 to 8, wherein the lithium transition metal oxide comprises $LiNi_xCo_yM^3_zO_2$, where $x \geq 0$, $y \geq 0$, $z \geq 0$, and $x+y+z=1$; wherein $M^3$ is selected from one or more of Mn, Al, Mg, Sr, V, Fe, Cr, Ni, Cu, Zn, Zr, Ti, Y, and W, and when $M^3$ is Al, Mg, or Sr, x and y cannot both be 0 at the same time.

10. The lithium battery according to claim 9, wherein $0.33 \leq x \leq 0.98$, $0 < y < 1$.

11. A power vehicle (1), comprising the lithium battery (10) according to any one of claims 1 to 10.

★一般★

FIG. 1

FIG. 2

## INTERNATIONAL SEARCH REPORT

| International application No. |
| --- |
| **PCT/CN2024/101331** |

**A. CLASSIFICATION OF SUBJECT MATTER**

H01M4/36(2006.01)i; H01M4/58(2010.01)i; H01M4/485(2010.01)i; H01M10/0567(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M4/- ; H01M10/-

Documentation searched other than minimum documentation to the extent that such documents are included in the fields searched

Electronic data base consulted during the international search (name of data base and, where practicable, search terms used)

CNABS, CNTXT, ENTXTC, OETXT, VEN, WPABSC, CNKI, ISI Web of Science: 锂, 正极, 碳酸亚乙烯酯, LFP, LMFP, 磷酸铁锂, 磷酸锰铁锂, 直流内阻, 放电容量, lithium, positive electrode, active material, Mn, Li, Fe, PO4

**C. DOCUMENTS CONSIDERED TO BE RELEVANT**

| Category* | Citation of document, with indication, where appropriate, of the relevant passages | Relevant to claim No. |
| --- | --- | --- |
| PX | CN 118231599 A (BYD CO., LTD.) 21 June 2024 (2024-06-21) description, paragraphs [0005]-[0037] | 1-11 |
| PX | CN 118231600 A (BYD CO., LTD.) 21 June 2024 (2024-06-21) description, paragraphs [0004]-[0041] | 1-11 |
| A | CN 116315032 A (BYD CO., LTD. et al.) 23 June 2023 (2023-06-23) description, paragraphs [0004]-[0047] | 1-11 |
| A | CN 115411346 A (NINGDE AMPEREX TECHNOLOGY LTD.) 29 November 2022 (2022-11-29) description, paragraphs [0004]-[0026] | 1-11 |
| A | CN 114122492 A (SHENZHEN CAPCHEM TECHNOLOGY CO., LTD.) 01 March 2022 (2022-03-01) description, paragraphs [0002]-[0050] | 1-11 |
| A | WO 2023050038 A1 (NINGDE AMPEREX TECHNOLOGY LTD.) 06 April 2023 (2023-04-06) entire description | 1-11 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **02 August 2024** | **03 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/101331** |

**C.     DOCUMENTS CONSIDERED TO BE RELEVANT**

| Category* | Citation of document, with indication, where appropriate, of the relevant passages | Relevant to claim No. |
|---|---|---|
| A | JP 2020102309 A (FURUKAWA BATTERY CO., LTD.) 02 July 2020 (2020-07-02) entire description | 1-11 |

Form PCT/ISA/210 (second sheet) (July 2022)

**INTERNATIONAL SEARCH REPORT**
Information on patent family members

International application No.

**PCT/CN2024/101331**

| Patent document cited in search report | | | Publication date (day/month/year) | Patent family member(s) | Publication date (day/month/year) |
|---|---|---|---|---|---|
| CN | 118231599 | A | 21 June 2024 | None | |
| CN | 118231600 | A | 21 June 2024 | None | |
| CN | 116315032 | A | 23 June 2023 | None | |
| CN | 115411346 | A | 29 November 2022 | None | |
| CN | 114122492 | A | 01 March 2022 | None | |
| WO | 2023050038 | A1 | 06 April 2023 | None | |
| JP | 2020102309 | A | 02 July 2020 | None | |

Form PCT/ISA/210 (patent family annex) (July 2022)

**EP 4 756 904 A1**

REFERENCES CITED IN THE DESCRIPTION

**Patent documents cited in the description**

- CN 202310957789